# FASCICULE DE BREVET EUROPEEN

(11) **EP 1 640 194 B1**
(45) Date de publication et mention de la délivrance du brevet: **21.01.2009**
(21) Numéro de dépôt: 05017555.3
(22) Date de dépôt: 12.08.2005
(51) Int. Cl.: B60H 1/00

(54) **Dispositif de chauffage, ventilation et/ou climatisation pour un habitacle de véhicule comportant des moyens de commande intégrés**
Heizungs-, Belüftungs-, und/oder Klimaanlage für ein Fahrzeuginnenraum mit integrierten Steuermitteln
Heating, ventilating, and/or air conditioning system for a vehicle interior with integrated control means

(30) Priorité: 28.09.2004 FR 0410251
(43) Date de publication de la demande: 29.03.2006
(73) Titulaire: Valeo Systèmes Thermiques, 78321 Le Mesnil St Denis Cedex (FR)
(72) Inventeur: Pierres, Philippe, 78990 Elancourt (FR)

(56) Documents cités:
- DE-A1- 10 013 396
- FR-A- 2 752 775
- FR-A- 2 825 948

## Description

L'invention concerne un dispositif de chauffage, ventilation et/ou climatisation pour un habitacle de véhicule, notamment de véhicule automobile.

Elle concerne plus particulièrement un dispositif du type comprenant un boîtier délimitant une chambre intérieure propre à être alimentée en air et au moins une sortie d'air commandée par au moins un volet apte à se déplacer sous l'action de moyens de commande pour régler la distribution de l'air traité au travers de la (des) sortie(s) d'air selon différents modes de distribution.

On connaît déjà des dispositifs de ce type qui sont montés sur des véhicules automobiles pour assurer le confort aérothermique du ou des occupants du véhicule.

Dans les dispositifs connus de ce type, la chambre intérieure est alimentée habituellement par de l'air traité, c'est-à-dire de l'air climatisé et/ou réchauffé, qui est ensuite réparti entre plusieurs sorties d'air par des volets mobiles selon différents modes de distribution.

Le plus souvent, ces sorties d'air comprennent au moins une sortie de ventilation ou sortie d'aération propre à alimenter une ou plusieurs buses de distribution généralement situées sur la planche de bord, une sortie de dégivrage propre à assurer le dégivrage et/ou désembuage du pare-brise, et au moins une sortie inférieure, encore appelée "sortie pieds", propre à envoyer de l'air vers la partie inférieure de l'habitacle.

Les moyens de commande assurent le déplacement des volets, de manière coordonnée, pour les amener dans différentes positions correspondant à différents modes de distribution.
Pour cela, on prévoit des organes de liaison, encore appelés "organes de cinématique", qui sont reliés aux volets pour assurer une coordination de leurs déplacements respectifs.

Dans les dispositifs connus, ces organes de liaison, qui assurent l'entraînement des volets, sont au moins en partie situés à l'extérieur du dispositif, c'est-à-dire à l'extérieur du boîtier.

Ces organes de liaison comprennent par exemple des leviers calés sur les axes des volets, à l'extérieur du boîtier, ces leviers étant articulés par exemple à des bielles ou biellettes, éventuellement avec des systèmes de câbles.

Le plus souvent, les moyens de commande agissent sur l'un des volets, par exemple avec un câble d'actionnement, et ce volet commande le déplacement des autres volets.

Ces solutions connues ont pour principal inconvénient d'augmenter l'encombrement du dispositif, puisque les organes de commande sont situés au moins en partie à l'extérieur du boîtier et qu'il faut leur laisser la place nécessaire pour leurs déplacements.

Or, dans les véhicules actuels, la place dévolue aux différents équipements est de plus en plus limitée.

Par ailleurs, ces solutions connues impliquent souvent un défaut de stabilité des organes de liaison.

Enfin, comme ces organes de liaison sont à l'extérieur du boîtier, ils sont plus exposés aux chocs, notamment en cas d'intervention sur le véhicule.

Le document FR 2 825 948 décrit un dispositif selon le préambule de la revendication 1.

Ce dispositif comprend un volet de dégivrage, un volet de ventilation et un volet inférieur montés au parallèle.

L'invention a notamment pour but de surmonter les inconvénients précités.

Elle vise en particulier à procurer un dispositif de chauffage, ventilation et/ou climatisation du type défini ci-dessus, dont les moyens de commande ne génèrent pas d'encombrement supplémentaire.

L'invention vise aussi à procurer un tel dispositif dont les organes de commande se trouvent à l'abri, notamment des chocs, et présentent une meilleure stabilité que dans la technique antérieure.

Elle vise encore à procurer un tel dispositif qui trouve une application particulière dans les habitacles des véhicules automobiles.

L'invention propose à cet effet un dispositif selon la revendication 1.

Suivant l'invention, le dispositif comprend une sortie de ventilation (ou sortie d'aération) commandée par un volet de ventilation, une sortie de dégivrage commandée par un volet de dégivrage et au moins une sortie inférieure (ou sortie pieds) commandée par un volet inférieur.

Ainsi, chaque organe de liaison, encore appelé "organe de cinématique", est disposé à l'intérieur du boîtier et relié à au moins un volet, ce qui permet de diminuer l'encombrement du dispositif, puisque cet encombrement est défini essentiellement par le boîtier lui-même.

De plus, chaque organe de liaison se trouve protégé à l'intérieur du boîtier et n'est donc pas susceptible d'être soumis à des chocs extérieurs, ce qui procure une meilleure stabilité de la cinématique de commande.

En outre, les efforts de commande à appliquer sur le ou les volets se trouvent diminués.

Enfin, l'invention permet de diminuer le nombre de pièces composant les organes de liaison, c'est-à-dire les organes de cinématique. En effet, il est possible d'intégrer de moulage au(x) volet(s) certains des organes de liaison.

L'organe de liaison peut être relié d'une part à un volet et d'autre part à un autre organe, tel que par exemple un actionneur. Cependant, l'invention s'applique de préférence aux cas où l'organe de liaison est interposé entre deux volets.

Les organes de liaison peuvent être réalisés sous différentes formes.

Il peut s'agir notamment d'un organe rigide de forme allongée, du type tringle ou bielle, articulé entre deux volets.

En pareil cas, l'organe de liaison peut être articulé entre deux volets, montés pivotants autour d'axes respectifs parallèles, ou bien encore entre deux volets montés pivotants autour d'axes respectifs orthogonaux.

En ce cas, il est avantageux que le dispositif comprenne un premier organe de liaison interposé entre le volet de ventilation et le volet de dégivrage et un deuxième organe de liaison interposé entre le volet de ventilation et le ou chaque volet inférieur.

Le premier organe de liaison peut être relié au volet de ventilation et au volet de dégivrage par deux articulations.

En variante, le premier organe de liaison peut être relié au volet de ventilation par une articulation et au volet de dégivrage par l'intermédiaire d'une came.

Le deuxième organe de liaison est avantageusement relié au volet de ventilation et au volet inférieur par deux articulations à rotule. Ceci présente un intérêt particulier lorsque le volet de ventilation et le volet inférieur sont montés pivotants autour d'axes respectifs non parallèles, par exemple orthogonaux.

Le dispositif de l'invention peut comprendre une seule sortie inférieure ou de préférence deux sorties inférieures. Dans ce cas, les sorties inférieures sont commandées respectivement par deux volets inférieurs, chaque volet inférieur étant relié au volet de ventilation par un deuxième organe de liaison.

Ces deux sorties inférieures sont de préférence affectées respectivement à un côté droit et à un côté gauche de l'habitacle.

Dans la description qui suit, faite seulement à titre d'exemple, on se réfère aux dessins annexés, sur lesquels :
- la figure 1 est une vue en coupe longitudinale d'un dispositif de chauffage, ventilation et/ou climatisation selon l'invention représenté dans un mode de distribution, à savoir un mode de ventilation ;
- la figure 2 est une vue partielle en perspective montrant les volets du dispositif de la figure 1 dans le même mode de distribution ;
- les figures 3 à 6 sont des vues partielles en perspective analogues à la figure 2 pour quatre autres modes de distribution, appelés respectivement "pieds/ventilation", "à trois niveaux", "pieds/dégivrage" et "dégivrage" ; et
- la figure 7 est une vue partielle en perspective et en coupe d'un dispositif selon une autre variante de réalisation, dont les volets sont dans un mode de distribution donné, à savoir un mode de ventilation.

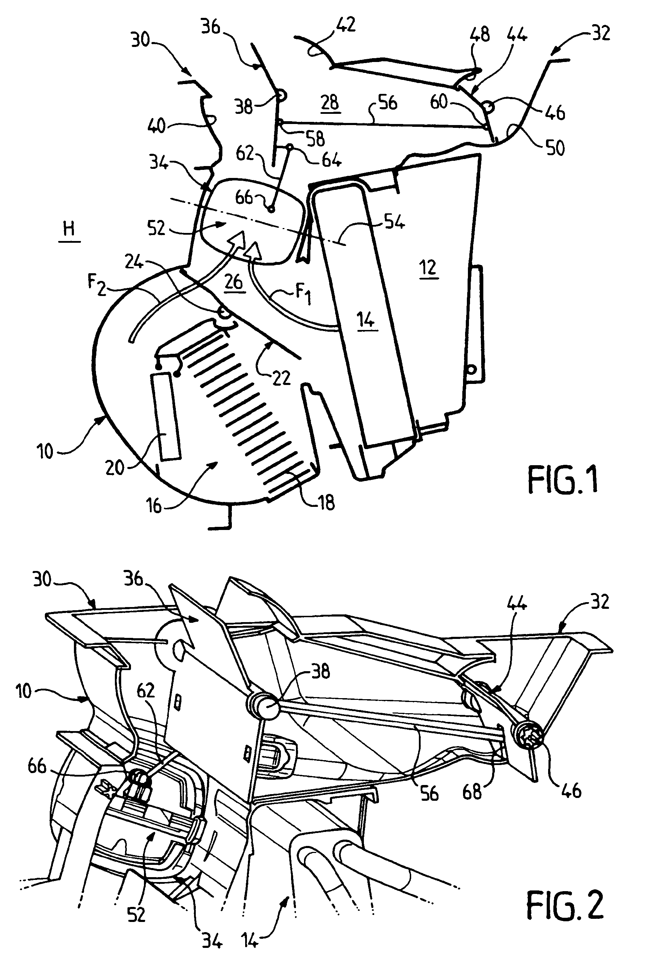

On se réfère d'abord à la figure 1 qui représente un dispositif de chauffage, ventilation et/ou climatisation pour un habitacle H de véhicule automobile. Ce dispositif comprend un boîtier 10 comportant une arrivée d'air 12 alimentée par une soufflante (non représentée), encore appelée "pulseur". Cette soufflante permet d'introduire dans le boîtier soit de l'air extérieur prélevé à l'extérieur de l'habitacle, soit de l'air recirculé prélevé à l'intérieur de l'habitacle, soit encore un mélange des deux. En aval de l'arrivée d'air 12 est logé un évaporateur 14 relié à un circuit de climatisation (non représenté) pour produire un flux d'air froid comme montré par la flèche F1.

En aval de l'évaporateur, le boîtier délimite une poche 16 dans laquelle est logé un radiateur de chauffage, à savoir un radiateur 18 traversé par un liquide chaud, habituellement le liquide de refroidissement du moteur du véhicule. Dans l'exemple de réalisation un radiateur de chauffage d'appoint 20 est disposé en aval du radiateur de chauffage 18. Le radiateur 20 est habituellement un radiateur électrique, par exemple à résistances à coefficient de température positif (résistances CTP). La combinaison de ces radiateurs de chauffage permet de produire un flux d'air chaud comme représenté par la flèche F2.

Un volet de mixage 22 monté pivotant autour d'un axe 24 permet de répartir, en proportion voulue, le flux d'air froid F1 et le flux d'air chaud F2. On obtient ainsi un flux d'air traité à température ajustée qui alimente une chambre de mixage 26.

Cette dernière constitue l'entrée d'une chambre intérieure 28 du boîtier qui alimente différentes sorties d'air.

Dans l'exemple de réalisation, ces sorties d'air comprennent une sortie de ventilation 30 (encore appelée sortie d'aération), une sortie de dégivrage 32 et deux sorties inférieures 34 (encore appelées sorties pieds), situées respectivement des deux côtés du boîtier.

La sortie de ventilation 30 est destinée à alimenter différentes buses d'aération ou ventilation placées généralement sur la planche de bord du véhicule. Cette sortie 30 est commandée par un volet de ventilation 36 réalisé ici sous la forme d'un volet papillon monté pivotant autour d'un axe 38. Les extrémités du volet sont propres à venir en contact étanche contre deux portions de parois cylindriques opposées 40 et 42, lorsque le volet se trouve dans une plage angulaire donnée.

La sortie de dégivrage 32 est destinée à alimenter différentes buses de dégivrage/désembuage disposées à la base du pare-brise et/ou de vitres latérales. La sortie de dégivrage 32 est commandée par un volet de dégivrage 44, également du type papillon, monté pivotant autour d'un axe 46 parallèle à l'axe 38. Les extrémités du volet 44 sont propres à coopérer avec étanchéité avec deux portions de parois cylindriques opposées 48 et 50, lorsque le volet se trouve dans une plage angulaire donnée.

Les deux sorties 34 sont prévues pour envoyer de l'air traité en partie inférieure de l'habitacle, dans la région des pieds des passagers, respectivement du côté droit et du côté gauche. Sur la figure 1, seule une des sorties 34 est visible, à savoir celle située sur le côté gauche.

Chaque sortie inférieure 34 est commandée par un volet inférieur 52 (encore appelé "volet pieds") réalisé aussi sous la forme d'un volet papillon monté pivotant autour d'un axe 54 qui s'étend orthogonalement par rapport aux axes 38 et 46.

La structure générale du dispositif, telle qu'elle vient d'être décrite jusqu'ici, est classique en soi. Dans la technique antérieure, la commande des différents volets est effectuée de façon coordonnée pour assurer différents modes de distribution, et cela à partir d'organes de commande, ou d'organes de cinématique, situés au moins en partie à l'extérieur du boîtier.

L'invention se démarque de cette technique antérieure en prévoyant des organes de liaison qui sont essentiellement contenus à l'intérieur du boîtier, et spécialement dans la chambre intérieure 28.

Un premier organe de liaison 56, réalisé sous la forme d'un organe rigide de forme allongée, telle qu'une tringle, est relié par une articulation 58 au volet 36. Cette articulation 58 est disposée sur l'une des ailes du volet à distance de l'axe 38. La tringle 56 est en outre reliée par une articulation 60 à l'une des ailes du volet de dégivrage 44, l'articulation 60 étant située à distance de l'axe 46.

Du fait que les volets 36 et 44 sont montés pivotants autour d'axes de rotation parallèles, les articulations 58 et 60 s'effectuent également autour d'axes respectifs parallèles aux axes 38 et 46. Il s'agit donc d'articulations du type pivot offrant un seul degré de liberté. Les articulations 58 et 60 peuvent être situées soit sur un bord d'un volet, soit dans une région centrale du volet, selon le cas.

Les organes de liaison comprennent en outre, deux autres organes de liaison 62 (dont un seul est visible sur la figure 1), chacun réalisé sous la forme d'une bielle. Chacune des bielles est reliée par une articulation à rotule 64 à l'une des ailes du volet de ventilation 36 et par une articulation 66 (également du type rotule dans l'exemple de réalisation) à l'une des ailes du volet inférieur 52. Les articulations 64 et 66 doivent fournir des articulations universelles, c'est- à-dire à trois degrés de liberté, étant donné que chaque volet inférieur 34 pivote autour d'un axe orthogonal par rapport à l'axe de pivotement du volet de ventilation 36. Dans l'exemple, l'articulation à rotule 64 se situe sur la même aile du volet 36 que l'articulation 58.

La tringle 56 et les deux bielles 62 permettent de coordonner les mouvements en rotation du volet de ventilation 36, du volet de dégivrage 44 et des deux volets inférieurs 52 en conformité d'une loi choisie. Dans la configuration de la figure 1, qui correspond à un mode de ventilation, seule la sortie de ventilation 30 est ouverte. La sortie de dégivrage 32 est fermée et il en est de même pour les deux sorties inférieures 34. Cette configuration se retrouve également sur la figure 2 qui montre une partie du boîtier en perspective et sur laquelle les éléments communs avec ceux de la figure 1 sont désignés par les mêmes références numériques. On voit notamment que la tringle 56 passe au travers d'une fente 68 du volet de dégivrage 44, l'articulation 60 (non visible sur la figure 2) étant située de l'autre côté du volet. On aperçoit également sur la figure 2 l'articulation à rotule 66 qui relie la bielle 62 au volet inférieur 52 correspondant.

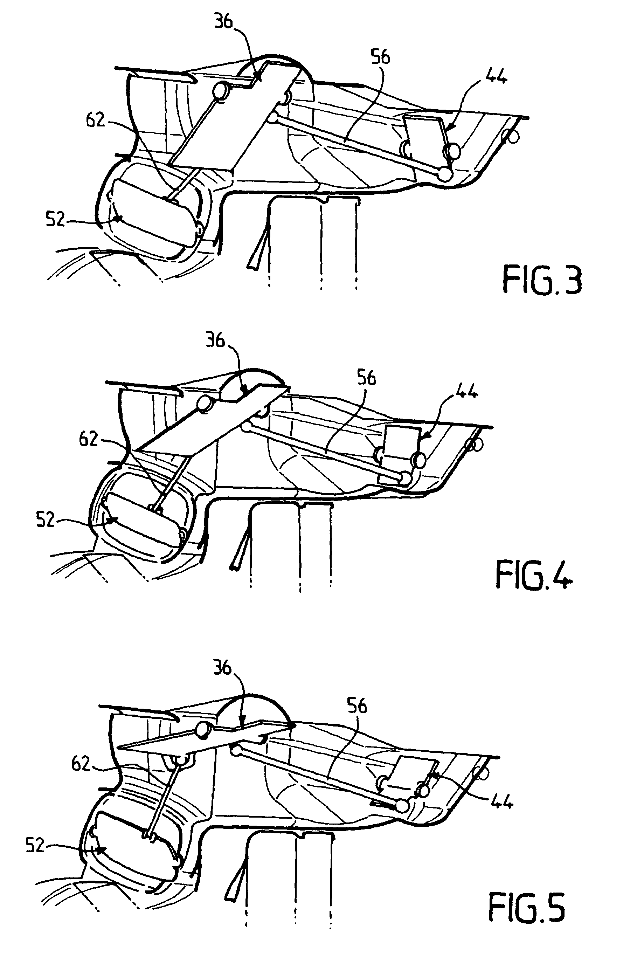

Les figures 3 à 6 sont des vues analogues à la figure 2 montrant les volets dans d'autres configurations ou modes de distribution.

Dans le cas de la figure 3, qui correspond à un mode "pieds/ventilation", chacune des sorties inférieures 34 est en partie ouverte, de même que la sortie de ventilation 30. Par contre, la sortie de dégivrage 32 est fermée. Par rapport à la configuration de la figure 1, les deux volets 36 et 44 ont pivoté légèrement dans le sens horaire. Les positions des figures 4, 5 et 6 sont obtenues par des pivotements des volets 36 et 44 toujours dans le sens horaire.

Dans la configuration de la figure 4, la sortie de ventilation est partiellement ouverte, de même que la sortie de dégivrage, tandis que les deux sorties pieds sont complètement ouvertes. Ceci correspond à un mode de distribution, appelé "à trois niveaux", qui favorise la distribution par les sorties inférieures.

La figure 5 montre une autre configuration dans laquelle la sortie de ventilation 30 est fermée, tandis que la sortie de dégivrage 32 est ouverte et que les deux sorties inférieures 34 sont également ouvertes. Ceci correspond à un mode de distribution appelé "pieds/dégivrage".

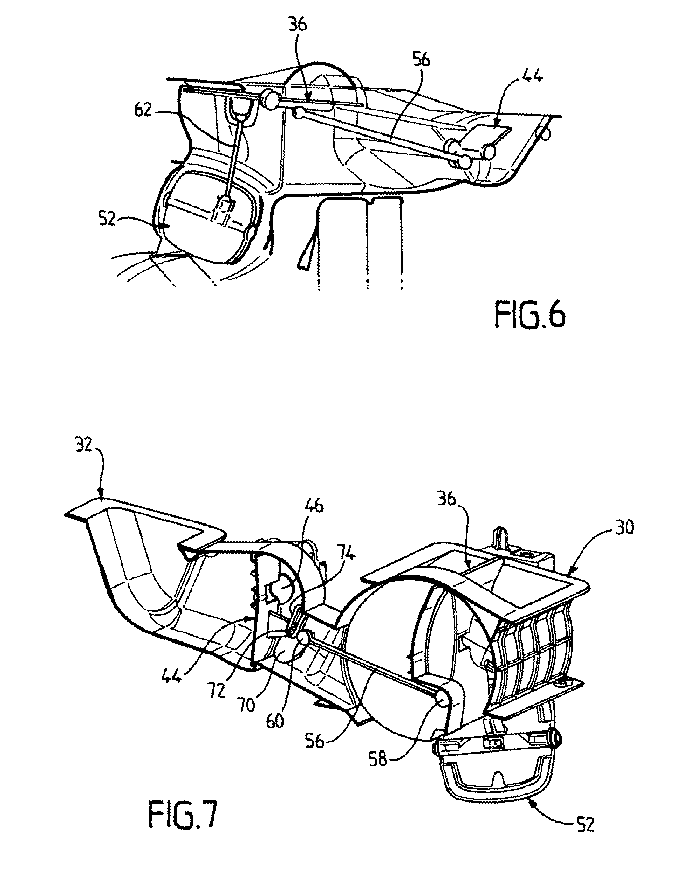

Enfin, la configuration de la figure 6 correspond à un mode de distribution appelé "dégivrage". En effet, seule la sortie de dégivrage 32 est ouverte. La sortie de ventilation 30 est fermée et il en est de même des deux sorties inférieures 34.

Les organes de liaison précités assurent par conséquent une coordination de mouvements entre les quatre volets selon une loi choisie. Il est bien entendu nécessaire de commander en rotation l'un des volets, ici le volet de ventilation 36 par un actionneur approprié, par exemple par une commande à câble agissant sur un levier (non représenté) calé sur l'axe 38 du volet de ventilation, le levier étant placé à l'extérieur du boîtier. On peut utiliser aussi d'autres types d'actionneurs, par exemple un actionneur électrique, un moteur pas-à-pas, etc.

La figure 7 montre une variante de réalisation dans laquelle on retrouve un volet de ventilation 36, un volet de dégivrage 44 et deux volets inférieurs 52, dont un seul est visible sur la figure. Le dispositif de la figure 7 est également représenté en mode ventilation.

Comme dans le mode de réalisation précédent, une tringle 56 est interposée entre le volet de ventilation 36 et le volet de dégivrage 44. La tringle 56 est reliée par une articulation 58 au volet de ventilation 36, comme dans la forme de réalisation précédente.

Par contre, l'articulation 60 de la tringle 56 est portée par un levier 70 monté pivotant sur le boîtier autour d'un axe parallèle aux axes de rotation des volets 36 et 44. Ce levier porte un doigt 72 qui coopère avec une came 74 portée par le volet de dégivrage 44. Ceci permet par conséquent de modifier la loi du mouvement entre les deux volets par rapport au mode de réalisation précédent.

On comprendra que l'invention est susceptible de nombreuses variantes de réalisation dans la mesure où les moyens de commande comprennent des organes de liaison disposés à l'intérieur du boîtier et reliés aux volets. Cela n'exclut pas la possibilité que d'autres organes de liaison soient situés à l'extérieur du boîtier si la configuration du boîtier et des volets ne permet pas un passage par l'intérieur.

Les volets sont constitués de préférence par des volets pivotants, par exemple du type drapeau, du type papillon ou encore du type tambour. Mais il peut s'agir aussi de volets d'autres types, par exemple de volets à déplacement linéaire.

Les organes de liaison sont de préférence des organes rigides allongés telles que des tringles ou des bielles. Cependant, on peut envisager d'autres types d'organes mécaniques, par exemple des systèmes à came, des systèmes à levier, des câbles de transmission, etc., ou encore des combinaisons de tels organes.

L'invention trouve une application particulière aux dispositifs de chauffage, ventilation et/ou climatisation des habitacles de véhicules automobiles.

## Revendications

1. Dispositif de chauffage, ventilation et/ou climatisation pour un habitacle de véhicule, comprenant un boîtier (10) délimitant une chambre intérieure (28) propre à être alimentée en air et une sortie de ventilation (30) commandée par un volet de ventilation (36), une sortie de dégivrage (32) commandée par un volet de dégivrage (44) et au moins une sortie inférieure (34) commandée par un volet inférieur (52), les volets de ventilation (36), de dégivrage (44) et inférieur (52)étant aptes à se déplacer sous l'action de moyens de commande (56, 62) pour régler la distribution de l'air au travers des sorties de ventilation (30), de dégivrage (32) et inférieure (34) selon différents modes de distribution,
**caractérisé en ce que** les moyens de commande comprennent des organes de liaison (56, 62) disposés à l'intérieur du boîtier (10) et reliés aux volets de ventilation (36), de dégivrage (44) et inférieur (52) de telle sorte que le dispositif comprend
un mode "ventilation" dans lequel la sortie de ventilation (30) est ouverte et la sortie inférieur (34) et la sortie dégivrage (32) sont fermées,
un mode "pieds/ventilation" dans lequel la sortie inférieur (34) et le sortie de ventilation (30) sont en partie ouvertes et la sortie dégivrage (32) est fermée,
un mode "pieds/dégivrage" dans lequel la sortie dégivrage (32) et la sortie inférieur (34) sont ouvertes et la sortie de ventilation est fermée,
un mode "dégivrage" dans lequel la sortie dégivrage (32) est ouverte et la sortie de ventilation (30) et la sortie inférieur sont fermées.

2. Dispositif selon la revendication 1, **caractérisé en ce qu'**un organe de liaison (56, 62) est réalisé sous la forme d'un organe rigide de forme allongée, du type tringle ou bielle, articulé entre deux volets (36, 44 ; 44, 52).

3. Dispositif selon l'une des revendications 1 et 2, **caractérisé en ce qu'**un organe de liaison (56) est articulé entre deux volets (36, 44) montés pivotants autour d'axes respectifs parallèles (38, 46).

4. Dispositif selon l'une des revendications 1 et 2, **caractérisé en ce qu'**un organe de liaison (62) est articulé entre deux volets (36, 52) montés pivotants autour d'axes respectifs orthogonaux (38, 54).

5. Dispositif selon l'une des revendications 1 à 4, **caractérisé en ce qu'**il comprend un premier organe de liaison (56) interposé entre le volet de ventilation (36) et le volet de dégivrage (44) et un deuxième organe de liaison (62) interposé entre le volet de ventilation (56) et le ou chaque volet inférieur (52).

6. Dispositif selon la revendication 5, **caractérisé en ce que** le premier organe de liaison (56) est relié au volet de ventilation (36) et au volet de dégivrage (44) par deux articulations (58, 60).

7. Dispositif selon la revendication 5, **caractérisé en ce que** le premier organe de liaison (56) est relié au volet de ventilation (36) par l'intermédiaire d'une articulation (60) et au volet de dégivrage (44) par l'intermédiaire d'une came (74).

8. Dispositif selon la revendication 5, **caractérisé en ce que** le deuxième organe de liaison (62) est relié au volet de ventilation (36) et au volet inférieur (52) par deux articulations à rotule (64, 66).

9. Dispositif selon l'une des revendications 5 à 8, **caractérisé en ce qu'**il comprend deux sorties inférieures (34), commandées respectivement par deux volets inférieurs (52) et **en ce que** chaque volet inférieur (52) est relié au volet de ventilation (36) par un deuxième organe de liaison (62).

10. Dispositif selon la revendication 9, **caractérisé en ce qu'**il comprend deux sorties inférieures (34) affectées respectivement à un côté droit et à côté gauche de l'habitacle.

11. Dispositif selon l'une des revendications précédentes, **caractérisé en ce qu'**il comprend une articulation (60) portée par un levier (70) monté pivotant sur le boîtier (10) autour d'un axe parallèle aux axes de rotation des volets (36, 44, 52).

12. Dispositif selon la revendication 11, **caractérisé en ce que** le levier (70) porte un doigt (72) coopérant avec une came (74) porté par les volets (36, 44, 52).

## Claims

1. Heating, ventilating and/or air conditioning device for a car interior, comprising a housing (10) defining an inner chamber (28) that may be supplied with air and a ventilation outlet (30) controlled by a ventilation flap (36), a defrost outlet (32) controlled by a defrost flap (44) and at least one lower outlet (34) controlled by a lower flap (52), wherein the ventilation (36), defrost (44) and lower (52) flaps are able to move under the action of control means (56, 62) to regulate the distribution of air through the ventilation (30), defrost (32) and lower (34) outlets according to different distribution modes,
**characterised in that** the control means comprise connecting controllers (56, 62) positioned inside the housing (10) and connected to the ventilation (36), defrost (44) and lower (52) flaps such that the device has
a "ventilation" mode in which the ventilation outlet (30) is open and the lower outlet (34) and the defrost outlet (32) are closed,
a "feet/ventilation" mode in which the lower outlet (34) and the ventilation outlet (30) are partially open and the defrost outlet (32) is closed,
a "feet/defrost" mode in which the defrost outlet (32) and the lower outlet (34) are open and the ventilation outlet is closed, and
a "defrost" mode in which the defrost outlet (32) is open and the ventilation outlet (30) and the lower outlet are closed.

2. Device according to claim 1, **characterised in that** the connecting controller (56, 62) is made in the form of a rigid, elongated controller of the link or connecting rod type, articulated between two flaps (36, 44; 44, 52).

3. Device according to one of claims 1 and 2, **characterised in that** a connecting controller (56) is articulated between two flaps (36, 44) that have a pivoting mounting around respective parallel axes (38, 46).

4. Device according to one of claims 1 and 2, **characterised in that** a connecting controller (62) is articulated between two flaps (36, 52) that have a pivoting mounting around respective orthogonal axes (38, 54).

5. Device according to one of claims 1 to 4, **characterised in that** it comprises a first connecting controller (56) positioned between the ventilation flap (36) and the defrost flap (44) and a second connecting controller (62) positioned between the ventilation flap (56) and the/each lower flap (52).

6. Device according to claim 5, **characterised in that** the first connecting controller (56) is connected to the ventilation flap (36) and the defrost flap (44) by two articulations (58, 60).

7. Device according to claim 5, **characterised in that** the first connecting controller (56) is connected to the ventilation flap (36) by means of an articulation (60) and to the defrost flap (44) by means of a cam (74).

8. Device according to claim 5, **characterised in that** the second connecting controller (62) is connected to the ventilation flap (36) and to the lower flap (52) by means of a ball and socket joint (64, 66).

9. Device according to one of claims 5 to 8, **characterised in that** it comprises two lower outlets (34), respectively controlled by two lower flaps (52) and **in that** each lower flap (52) is connected to the ventilation flap (36) by a second connecting controller (62).

10. Device according to claim 9, **characterised in that** it comprises two lower outlets (34), respectively attributed to a left side and a right side of the car interior.

11. Device according to one of the previous claims, **characterised in that** it comprises an articulation (60) borne by a lever (70) which has a pivoting mounting on the housing (10) around an axis that is parallel to the axes of rotation of the flaps (36, 44, 52).

12. Device according to claim 11, **characterised in that** it the lever (70) has a finger (72) which cooperates with a cam (74) borne by the flaps (36, 44, 52).

## Patentansprüche

1. Heizungs-, Belüftungs- und/oder Klimasteuerungseinrichtung für einen Fahrgastraum eines Fahrzeugs, umfassend ein Gehäuse (10), das eine Innenkammer (28), die dazu dient, mit Luft versorgt zu werden, und einen Lüftungsaustritt (30) begrenzt, der von einer Lüftungsklappe (36) gesteuert wird, und einen Entfrostungsaustritt (32), der von einer Entfrostungsklappe (44) gesteuert wird, und mindestens einen unteren Austritt (34), der von einer unteren Klappe (52) gesteuert wird, wobei die Lüftungsklappe (36), Entfrostungsklappe (44) und untere Klappe (52) imstande sind, sich unter der Einwirkung von Steuermitteln (56, 62) zu verschieben, um die Luftverteilung durch den Lüftungsaustritt (30), Entfrostungsaustritt (32) und unteren Austritt (34) gemäß unterschiedlicher Verteilungsmodi zu regulieren,
**dadurch gekennzeichnet, dass** die Steuermittel Verbindungsvorrichtungen (56, 62) umfassen, die im Inneren des Gehäuses (10) angeordnet sind und mit der Lüftungsklappe (36), Entfrostungsklappe (44) und unteren Klappe (52) verbunden sind, so dass die Einrichtung
einen Modus "Belüftung", in dem der Lüftungsaustritt (30) offen ist und der untere Austritt (34) und der Entfrostungsaustritt (32) geschlossen sind,
einen Modus "Fußraum/Belüftung", in dem der untere Austritt (34) und der Lüftungsaustritt (30) teilweise offen sind und der Entfrostungsaustritt (32) geschlossen ist,
einen Modus "Fußraum/Entfrostung", in dem der Entfrostungsaustritt (32) und der untere Austritt (34) offen sind und der Lüftungsaustritt geschlossen ist, und einen Modus "Entfrostung", in dem der Entfrostungsaustritt (32) offen ist und der Lüftungsaustritt (30) und der untere Austritt geschlossen sind, umfasst.

2. Einrichtung nach Anspruch 1, **dadurch gekennzeichnet, dass** eine Verbindungsvorrichtung (56, 62) in der Form einer starren Vorrichtung mit lang gezogener Form in Stangen- oder Kolbenstangenart ausgeführt und zwischen zwei Klappen (36, 44; 44, 52) gelenkig gelagert ist.

3. Einrichtung nach einem der Ansprüche 1 und 2, **dadurch gekennzeichnet, dass** eine Verbindungsvorrichtung (56) zwischen zwei Klappen (36, 44) gelenkig gelagert ist, die um jeweilige parallele Achsen (38, 46) schwenkbar montiert sind.

4. Einrichtung nach einem der Ansprüche 1 und 2, **dadurch gekennzeichnet, dass** eine Verbindungsvorrichtung (62) zwischen zwei Klappen (36, 52) gelenkig gelagert ist, die um jeweilige orthogonale Achsen (38, 54) schwenkbar montiert sind.

5. Einrichtung nach einem der Ansprüche 1 bis 4, **dadurch gekennzeichnet, dass** sie eine erste Verbindungsvorrichtung (56), die zwischen der Lüftungsklappe (36) und der Entfrostungsklappe (44) eingesetzt ist, und eine zweite Verbindungsvorrichtung (62) umfasst, die zwischen der Lüftungsklappe (56) und der oder jeder unteren Klappe (52) eingesetzt ist.

6. Einrichtung nach Anspruch 5, **dadurch gekennzeichnet, dass** die erste Verbindungsvorrichtung (56) mit der Lüftungsklappe (36) und mit der Entfrostungsklappe (44) über zwei Gelenke (58, 60) verbunden ist.

7. Einrichtung nach Anspruch 5, **dadurch gekennzeichnet, dass** die erste Verbindungsvorrichtung (56) mit der Lüftungsklappe (36) mittels eines Gelenks (60) und mit der Entfrostungsklappe (44) mittels eines Nockens (74) verbunden ist.

8. Einrichtung nach Anspruch 5, **dadurch gekennzeichnet, dass** die zweite Verbindungsvorrichtung (62) mit der Lüftungsklappe (36) und mit der unteren Klappe (52) über zwei Gelenklager (64, 66) verbunden ist.

9. Einrichtung nach einem der Ansprüche 5 bis 8, **dadurch gekennzeichnet, dass** sie zwei untere Austritte (34) umfasst, die jeweils von zwei unteren Klappen (52) gesteuert werden, und **dadurch**, dass jede untere Klappe (52) mit der Lüftungsklappe (36) über eine zweite Verbindungsvorrichtung (62) verbunden ist.

10. Einrichtung nach Anspruch 9, **dadurch gekennzeichnet, dass** sie zwei untere Austritte (34) umfasst, die jeweils einer rechten Seite und einer linken Seite des Fahrgastraums zugeordnet sind.

11. Einrichtung nach einem der vorhergehenden Ansprüche, **dadurch gekennzeichnet, dass** sie ein Gelenk (60) umfasst, das von einem Hebel (70) getragen wird, der auf dem Gehäuse (10) schwenkbar um eine Achse montiert ist, die parallel zu den Rotationsachsen der Klappen (36, 44, 52) verläuft.

12. Einrichtung nach Anspruch 11, **dadurch gekennzeichnet, dass** der Hebel (70) einen Zapfen (72) trägt, der mit einem Nocken (74) zusammenwirkt und von den Klappen (36, 44, 52) getragen wird.
